(19) Europäisches Patentamt
European Patent Office
Office européen des brevets

(11) **EP 4 185 026 A1**

(12) **EUROPEAN PATENT APPLICATION**

(43) Date of publication:
**24.05.2023 Bulletin 2023/21**

(51) International Patent Classification (IPC):
***H04W 56/00*** (2009.01)

(21) Application number: **21209397.5**

(52) Cooperative Patent Classification (CPC):
**H04W 56/0065; H04W 56/0015**

(22) Date of filing: **19.11.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Danalto Limited**
**9 Dublin (IE)**

(72) Inventors:
• **Hassan, Khaled**
  **9 Dublin (IE)**
• **Farrell, Tom**
  **9 Dublin (IE)**
• **McDonald, David**
  **9 Dublin (IE)**

(74) Representative: **Purdylucey Intellectual Property**
**6-7 Harcourt Terrace**
**D02 FH73 Dublin 2 (IE)**

(54) **TWO WAY RANGING METHOD FOR OBTAINING RANGING INFORMATION FOR OBSERVERS**

(57)   A two-way ranging (TWR) system includes a plurality of anchors that enclose a geographical region. Each anchor is configured to run a two-way ranging (TWR) session with another anchor, wherein a set of TWR sessions among the plurality of anchors are sequential and synchronised with respect to each other, to minimize discovery time of a mobile observer roaming within the geographical region, for gathering ranging information.

FIG.2

**Description**

**Field**

The disclosure relates to obtaining ranging information for observers, and more specifically to a method of coordinating two-way ranging sessions for observers.

**Background of Invention**

Two Way Ranging (TWR) describes the exchange of radio transmission between two unsynchronized devices, namely ranging master and ranging slave, for the ranging master to determine the Round-Trip Time of Flight (RTToF) and, thus, the distance between itself to the ranging slave. The transmission from the master to the slave is called ping while the response back from the slave to the master is called ping ack. In the same context, Advance Ranging (AR) is the process of an observer passively overhearing a distant TWR transmission and calculating a Time Difference of Arrival (TDoA), so equivalently difference in distance between the ranging master to the ranging slave when the distance between the master and the slave is known.

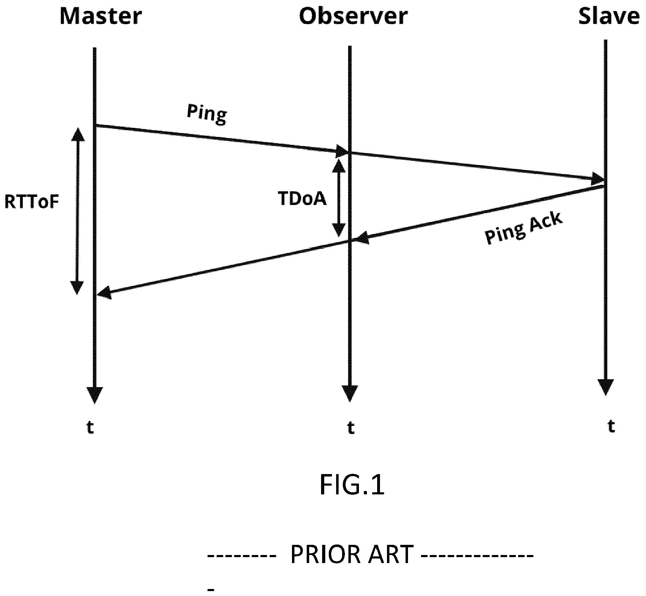

FIG.1 shows the exchange of transmissions between the master and slave to determine RTToF and TDoA in TWR and AR, in the presence of an observer, respectively. Consequently, AR can offer a high capacity and low-power ranging framework because it is passively listening (i.e., no transmissions), which is highly desirable in the area of Low Power Wide Area (LPWA) Internet of Things (IoT). In the commercial world, Semtech offers AR mode of operation in their SX1280 radios on top of their proprietary Long Range (LoRa) modulation in the 2.4 GHz band.

However, radio localization using LPWAN transmissions in general, including LoRa in 2.4GHz, is not accurate due to its narrowband nature, resulting in a low temporal resolution in ranging measurements. Considering the speed of light in the air as c, the spatial resolution denoted with $\Delta d$, is inversely proportional to the signal bandwidth, denoted with $f$, as follows:

$$\Delta d = \frac{c\Delta t}{2} = \frac{c}{2f} \dots\dots\dots\dots\dots\dots\dots\dots\dots\dots\dots\dots\dots\dots\dots\dots\dots\dots\dots (1)$$

For example, LoRa 2.4 transmissions, where the maximum bandwidth available is 1.6 MHz, resulting in a resolution equal to 93.75 m. This resolution can be improved using multi-channel ranging that combines several narrowband ranging, denoted with $k$, on different channels with uniform spacing, denoted with $\Delta f$, to form a larger virtual bandwidth equal to $\Delta f(k - 1)$. Consequently, spatial resolution using multi-channel ranging can be derived as follows:

$$\Delta d = \frac{c}{\Delta f(k-1)} \dots\dots\dots\dots\dots\dots\dots\dots\dots\dots\dots\dots\dots\dots\dots\dots\dots\dots\dots (2)$$

resulting in a resolution of 3.75m with $\Delta f = 4MHz$ and $k = 20$, scanning the whole unlicensed 80MHz of the 2.4GHz band.

Consequently, for a high-resolution ranging using narrowband transmissions, several ranging pings are performed on different channels between a master and a slave, where each set of ping/ping acks is , named a ranging session. The ranging session could be in the TWR mode for the master to determine its distance away from the slave or in the AR mode for an observer to determine its distance difference between the master to the slave. To establish a ranging session, a master sends a ranging request to a listening slave, containing all information required to perform the ranging such as the channel sequence and any configurable parameters specific to the modulation used in ranging. For example, in the case of LoRa 2.4, the configurable parameters can include the spreading factor (SF) and bandwidth used in ranging. All this information is called the ranging recipe. Once the ranging request is received and approved by the slave, the slave responds with a ranging accept, which once received by the master, allows the master to start the agreed ranging sequence with the slave.

For observers, in AR mode, they must discover the ranging recipe in advance to be able to observe a ranging session. This discovery process is known to be a time and energy-consuming process in unsynchronized communications that would get worse when observers want to discover multiple ranging sessions for estimating their positions. Indeed, a minimum of two different sessions is needed to be discovered for an observer to apply multi-lateration and obtain its two-dimensional position. Since ranging sessions geometry plays a crucial role in the positional accuracy, according to the geometry dilution of precision, the discovery process also must take this into account to only discover the most relevant ranging sessions in a plurality of sessions to estimate the most accurate position.

For some modulation formats such as with LoRa modulation, it is possible to use different formats, data rates or otherwise to achieve larger receiving sensitivity or higher data rate as required. For example, with LoRa modulation, a Spreading Factor (SF) is used which spreads the data over a longer period (SF10 as opposed to SF7) and hence allows for greater sensitivity (i.e., longer range) at the expense of higher power consumption.

Hence, in view of the above, there is a need for a method that allows for a maximum range of positioning while optimising battery lifetime. Also, it would be desirable to improve the discovery process for the observers to efficiently observe the most relevant ranging sessions in terms of time and energy and, thus, estimate the most accurate position.

## Summary of the Invention

In an aspect of the present invention, there is provided a two-way ranging (TWR) system that includes a plurality of anchors provided to enclose a geographical region, each anchor configured to run a two-way ranging (TWR) session with another anchor, wherein a set of TWR sessions among the plurality of anchors are sequential and synchronised with respect to each other, to minimize discovery time of a mobile observer roaming within the geographical region, for gathering ranging information.

The present invention improves the discovery process at the mobile observers by coordinating two-way ranging sessions in time, code or/and frequency domains for efficiently discovering the most relevant ranging sessions in terms of time and energy and, thus, estimating their accurate positions. Also, a topology among anchors is provided to cover a large deployment area without losing observers' positioning accuracy and to configure, announce and discover ranging sessions for minimizing power consumption at observers. The ranging sessions are synchronized such that they may be executed sequentially in time and parallelly in code. Using afore-mentioned topology and techniques, the mobile observers may easily discover the required sessions, and obtain enough ranging measurements to estimate their positions.

In an embodiment of the present invention, the plurality of anchors includes four anchors positioned at four corners of the geographical region to form a box, wherein the plurality of anchors range with each other based on predefined parent and child relationships among the four anchors, and wherein a parent anchor operates in master mode to initiate a TWR ranging session with corresponding child anchor that operates in slave mode, and wherein an anchor becomes a parent to corresponding child anchor in a current TWR session when the anchor has ranged with corresponding parent anchor in a previous TWR session.

In an embodiment of the present invention, an anchor ranges with an adjacent anchor in the box.

In an embodiment of the present invention, an anchor ranges with a diagonally opposite anchor in the box.

In an embodiment of the present invention, one anchor of the four anchors is set to be a primary anchor for ranging with corresponding child anchor in a first time slot of a sequence of predefined number of time slots, and for ranging with corresponding parent anchor in a last time slot of the sequence of predefined number of time slots, and wherein upon completion of the predefined number time slots of a current sequence, the primary anchor ranges with corresponding child anchor in a first time slot of corresponding next sequence.

In an embodiment of the present invention, a plurality of boxes is combined to form an extended network based on a set of predefined rules, the set of predefined rules including having one active TWR session per box, every two adjacent boxes sharing a side, and time slots for conducting TWR sessions being allocated to respective anchors in clockwise direction of the respective box.

In an embodiment of the present invention, when an anchor has a plurality of child anchors in the extended network, a time offset integer is assigned to each child anchor, to introduce time delay among TWR sessions between the anchor and each child anchor.

In an embodiment of the present invention, wherein in the extended network, the primary anchor sets current time t=0, and initiates ranging with a corresponding child anchor, and increases current time by a predefined time slot every time upon ranging with each child anchor, and wherein the primary anchor switches to slave mode upon ranging with each of corresponding child anchors, and sets current time t=0, after ranging with corresponding parent anchor, or when the current time exceeds a threshold time duration.

In an embodiment of the present invention, wherein in the extended network, an anchor other than the primary anchor accepts ranging requests from corresponding other anchors till the anchor ranges with corresponding parent anchor, and upon ranging with corresponding parent anchor, the anchor switches to master mode to range with corresponding child anchors, and upon ranging with each child anchor, the anchor switches to slave mode.

In an embodiment of the present invention, wherein a master anchor sends a ranging request, containing a ranging recipe and an identification of corresponding slave anchor to initiate a TWR session, and said slave anchor responds to the master anchor with a ranging acceptance, containing agreed recipe and a ranging session address, wherein the ranging session address is a unique identification formed at the slave anchor based on the master and the slave addresses, and wherein the master anchor forms a ranging session address upon receiving a ranging acknowledgement from corresponding child anchor, and checks against the ranging session address received in the ranging acknowledgement.

In an embodiment of the present invention, the mobile observer wakes up to listen to one or more ranging requests and ranging accept messages and calculate corresponding time difference of arrival (TDoA) by executing corresponding ranging recipes, and wherein a position of the mobile observer is estimated based on a plurality of calculated TDoAs.

In an embodiment of the present invention, a TWR session between master and slave anchors is executed using one or more Spreading factors (SFs) in same time domain.

In an embodiment of the present invention, the mobile observer is configured to listen to ranging information corresponding to a low spreading factor when the mobile observer is within a predetermined distance from corresponding master and slave anchors, and is configured to listen to ranging information corresponding to a high spreading factor, when the mobile observer is outside of the predetermined distance from corresponding master and slave anchors or when the mobile observer does not discover the ranging information corresponding to the low spreading factor. The bandwidth of the channel may also be controlled in the same way.

In an embodiment of the present invention, wherein, the master and slave may alternate roles in single session to provide interleaving session requests and session request acknowledgements to cancel common mode error in calculation of TDoA based on the ranging information of the master and slave anchors..

In an embodiment of the present invention, wherein each anchor is a radio-capable Internet of things (IoT) fixed device with two-way ranging capability, and the mobile observer is a radio-capable IoT device with advanced ranging capability.

In another aspect of the present invention, there is provided a two-way ranging (TWR) method. The method includes providing a plurality of anchors provided to enclose a geographical region, each anchor configured to run a two-way ranging (TWR) session with another anchor, and enabling a set of sequential and synchronized TWR sessions among the plurality of anchors with respect to each other, to minimize discovery time of a mobile observer roaming within the geographical region, for gathering ranging information.

In another aspect of the present invention, there is provided a non-transitory computer readable medium having stored thereon computer-executable instructions which, when executed by a processor, cause the processor to synchronize a set of TWR sessions among a plurality of anchors with respect to each other, to minimize discovery time of a mobile observer roaming within the geographical region, for gathering ranging information, wherein the plurality of anchors encloses a geographical region, and each anchor is configured to run a two-way ranging (TWR) session with another anchor.

## Brief Description of the Drawings

The invention will be more clearly understood from the following description of an embodiment thereof, given by way of example only, with reference to the accompanying drawings, in which:-

FIG.1 shows transmissions exchange between the master and slave to determine RTToF and TDoA in TWR and AR, in the presence of an observer, respectively;

FIG.2 illustrates a basic network unit formed by four static anchors A, B, C and D, in accordance with an embodiment of the present invention;

FIG.3 illustrates the topology representation of the basic network unit, in accordance with an embodiment of the present invention;

FIG.4 illustrates an exemplary sequence of ranging pings, in accordance with an embodiment of the present invention;

FIG.5 illustrates an extended network formed by combining multiple basic network units, in accordance with an embodiment of the present invention;

FIG.6 illustrates a child's anchor identification array including topology representation of the extended network unit, in accordance with an embodiment of the present invention;

FIG.7 is a flowchart that illustrates operational functionality of a primary anchor of FIG.5, in accordance with an embodiment of the present invention;

FIG.8 is a flowchart that illustrates operational functionality of all anchors other than the primary anchor of FIG.5, in accordance with an embodiment of the present invention;

FIG.9 illustrates another topology of the basic network unit of FIG.2, in which the anchors engage in diagonal ranging sessions, in accordance with an embodiment of the present invention; and

FIGs.10A and 10B illustrate the IoT implementation of the basic network unit 200, in accordance with an embodiment of the present invention.

## Detailed Description of the drawings

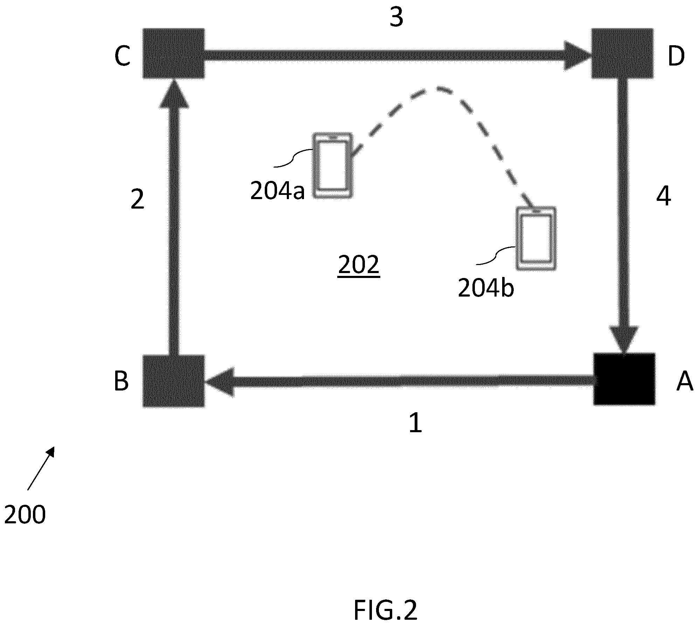

FIG.2 illustrates a two-way ranging system 200 that includes a plurality of anchors A, B, C and D enclosing a geographical region 202, in accordance with an embodiment of the present invention. Typically, the anchors A, B, C and D are deployed in the four corners of the geographical region 202 to form a box. Each static anchor A, B, C and D includes a radio transceiver, and is identified by a unique Media Access Control (MAC) address. Further, each static anchor is configured to run a TWR session with another by exchanging Radio frequency (RF) signals. In the context of the present invention, the box forms a scalable unit that can be used to build larger networks. Also, the TWR session is interchangeably referred to as session, and vice versa.

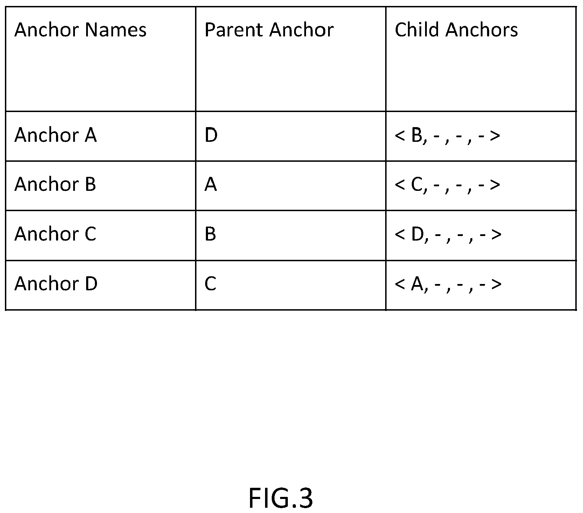

FIG.3 illustrates the topology representation of the box, in accordance with an embodiment of the present invention. Referring to FIGs.2 and 3 together, the anchor A is called the primary anchor and it holds the time synchronization functionalities to start the first TWR session and repeat the sequence every four timeslots. The anchor A (Master) starts the first TWR session with anchor B (slave). Next, anchor B becomes the master of the second TWR session with anchor C (slave). Next, anchor C becomes the master of the third TWR session with anchor D (slave). Next, anchor D becomes the master of the fourth TWR session with anchor A (slave), forming a full loop. Then, the same sequence continues to repeat. The timeslot should be long enough to accommodate one full ranging session. However, anchors B, C and D just execute ranging sessions according to the topology, where once ranged with the parent anchor, it becomes the master of the next session to its child anchor(s). Therefore, anchors B, C and D can be in a slave mode until they range with their parent anchors, which eases the time synchronization among anchors significantly. The directions of the supported TWR sessions are shown by the arrows, where the tail of an arrow represents the slave anchor, and the head represents the master anchor. The numbers on the arrows represent the time order of executing the TWR sessions.

In a simple deployment, each anchor A, B, C and D is equipped with only one radio processor, and can operate in one mode of operation, either in a master mode, or a slave node. Therefore, in one embodiment, embedded software is deployed on the anchors to switch between the master and the slave functionalities as needed.

Referring back to FIG.2, within the geographical region 202, first and second mobile observers 204a and 204b roam around, whose positions may be estimated periodically or based on specific events, based on TWR sessions exchanged by the anchors A, B, C or D. Each observer 204a and 204b is provided with a low-power tag and is shown to be roaming in the geographical region 202. Each observer 204a and 204b observes the TWR ranging sessions among the four anchors A, B, C and D, using the aforementioned advance ranging technology for estimating their positions. Each observer 204a and 204 may be hereinafter interchangeably referred to as a tag.

Further, as mentioned before, the TWR sessions among anchors A, B, C and D are synchronised with each other, and therefore, once a tag is able to receive/observe one session say from A to B then it knows that another session from B to C would start directly afterwards. This minimizes discovery time of a mobile observer roaming within the geographical region 202, for gathering ranging information. In this way, the tag needs to discover the first session only, as compared to a scenario where the tag needs to discover each session independently due to asynchronous nature of the sessions. In an example, if a session took 1 second, then on an average, the tag may need to wait for ½ seconds to acquire each session, and in an asynchronous set up, the discovery time would be around 2 seconds for discovering 4 sessions. In a synchronized set-up as described with reference to FIG.2, the discovery time is ½ seconds for any number of sessions.

The topology representation as described with reference to FIG.3 describes the coordination in the time domain, however, another coordination in the code domain could be applied using the different Spreading Factors (SFs). Indeed, the different SFs provide orthogonal virtual channels in which higher SF can provide higher receiver sensitivity and, thus, longer range. This depends mainly on the hardware capability of the receiving and transmitting antennas of the anchors. Preferably, each anchor A, B, C and D described herein has a single receiving and transmitting antenna.

Consequently, the same TWR session between the same anchors could be executed using one or more SFs in the same time domain. The same ranging session might be running using different SFs. This utilizes the radio frequency to enable multiple ranging sessions without any expenses on the observers as they can only listen to one ranging session, using one SF, at a time.

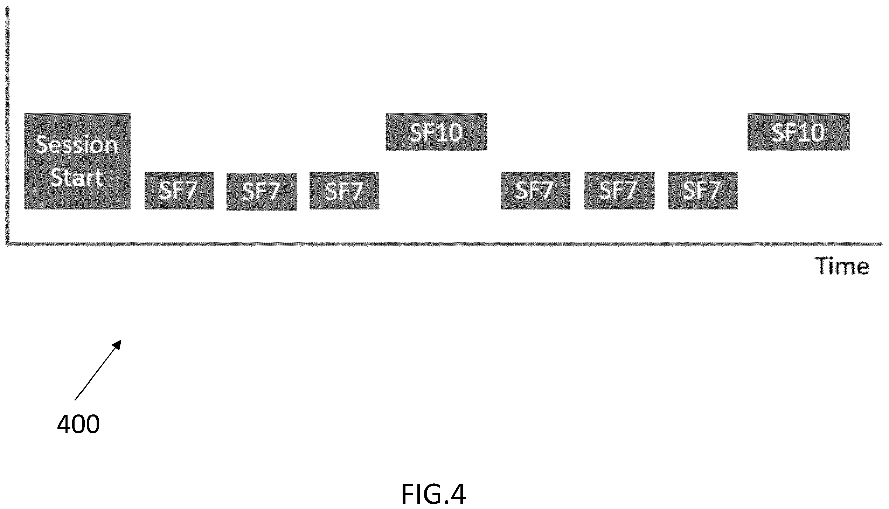

Each anchor may use a set of SF and data rates for a sequence of ranging pings. FIG.4 illustrates an exemplary sequence 400 of ranging pings, which include a set of pings at SF7 interleaved with asset of pings at SF10. In addition, bandwidth of the signal may also be adjusted and other controls which affect the data rate may also be varied. The sequence of channels, SF and bandwidth may be synchronised between the anchors and the tag as the tag may be listening at to the right SF, bandwidth, and channel to receive the pings from the master and slave. To this end, a sequence may be predetermined and programmed into all three devices (master, slave, and tag), so that they may follow the predetermined sequence. In the case, where a tag is close to the master/slave and may easily receive the SF7 pings it may decide to only listen to these pings to optimise battery as these pings are shorted in length and take less battery power to receive. When the SF10 pings are transmitted, the tag may remain asleep and wakeup for the next scheduled SF7 ping. Conversely when a tag is far away from the master and slave, it may not be able to receive the SF7 pings and if the first set of attempts fail, it may wait for the SF10 pings and attempt to receive these. In this way the battery life of the tag may be optimised to provide the ranging capability best suited to the location of the tag.

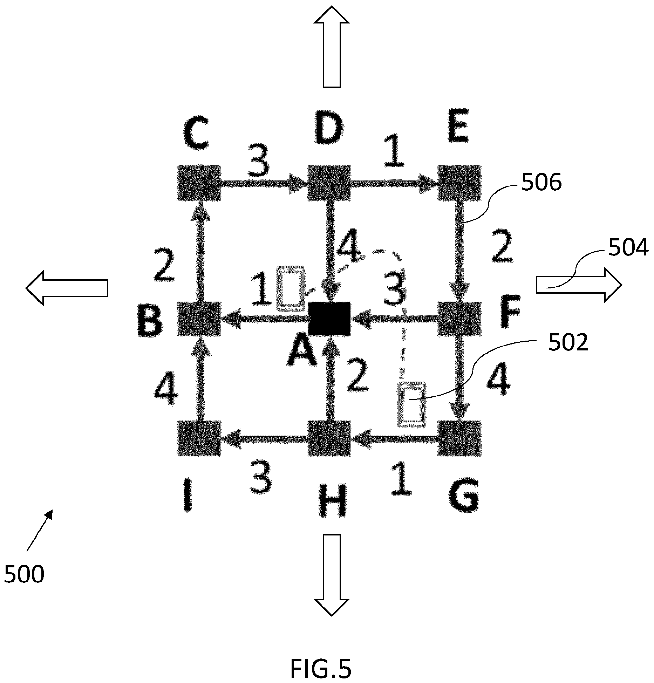

FIG.5 illustrates an extended network 500 formed by combining multiple basic network units 200, in accordance with an embodiment of the present invention. The extended network 500 includes four boxes, each like the one illustrated in FIG.2. The extended network 500 includes an extended topology beyond four anchors with a tag 502 roaming between the different boxes. The use of smaller basic network units 200 to form an extended network unit 500 is useful in maintaining a line-of-sight between anchors, and between anchors and observers, and/or to maintain the positional accuracy of observers.

In an embodiment of the present invention, the extended network unit 500 is formed by extending the basic network unit 200 using a set of pre-defined rules to cover a larger area. One such rule is having one active ranging session per box, another such rule is that every two adjacent boxes share one side and yet another such rule is that time slots for conducting TWR ranging sessions are allocated to respective anchors in the clockwise direction.

Further, the large arrows 504 herein signify that the network 500 can be extended evenly in the four directions, North, South, East, and West to cover all possible deployment area shapes. The small arrows 506 represent the direction of the session, where the tail of an arrow represents the slave anchor, and the head represents the master anchor. It would be apparent to one of ordinary skill in the art, that the extended network 500 is not limited to the topology illustrated herein, and many other topologies are possible, with arrows going in different directions and orders.

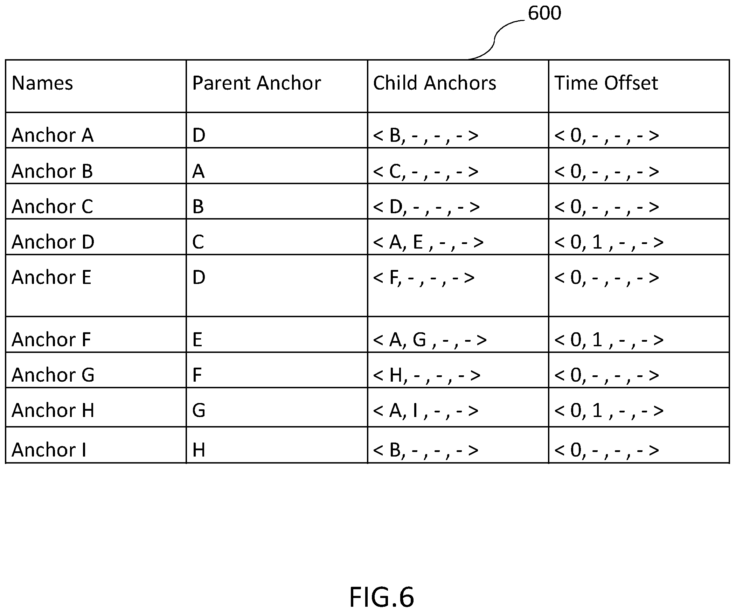

FIG.6 illustrates a child's anchor identification array 600 including topology representation of the extended network unit 500, in accordance with an embodiment of the present invention. Also, computer software is used to commission each anchor according to the topology with a parent anchor identification and child anchor identifications array 600.

Referring to FIGs. 5 and 6 together, the order of the ranging in the extended network unit 500 follows the same order as specified in child's anchor array 600. An anchor may accept ranging sessions from any other anchors in the topology, however, it may not start its sequential ranging sessions procedure (i.e., being master of its child anchors) unless it receives a ranging session from its parent anchor. In an example, the anchor A may involve in ranging sessions with anchors F and H by being in a slave mode, however, anchor A would be master of anchor B only after it receives the ranging session from its parent anchor D. This sequential nature of executing the ranging sessions may be captured using slot numbers on the arrows 506. Therefore, each anchor is only concerned to know its parent anchor ID and not all master anchors IDs. Further, each of the anchors D, F, and H have two child anchors. Therefore, once one of these anchors ranges with its parent anchor, they will become a master in next two sessions to range with their two-child anchors.

Further, when the topology gets larger than one box, collisions might happen between the different boxes. In an example, three different sessions may share the same time slot, resulting in potential collisions among their ranging requests. To avoid these collisions, a slight time offset may be used for the sessions from the adjacent boxes. This may be done by assigning a time offset integer to each child anchor in the child anchors array. The numbers show the time delay slot needed. The delay slot is long enough to accommodate sending one ranging request message. Consequently, zeros mean no delay is needed and the next session may be executed straight away. Any other integers represent a time delay that equals that integer multiplied by the delay slot. Using this time offset, all collisions may be avoided, reflecting well on the efficiency of the method.

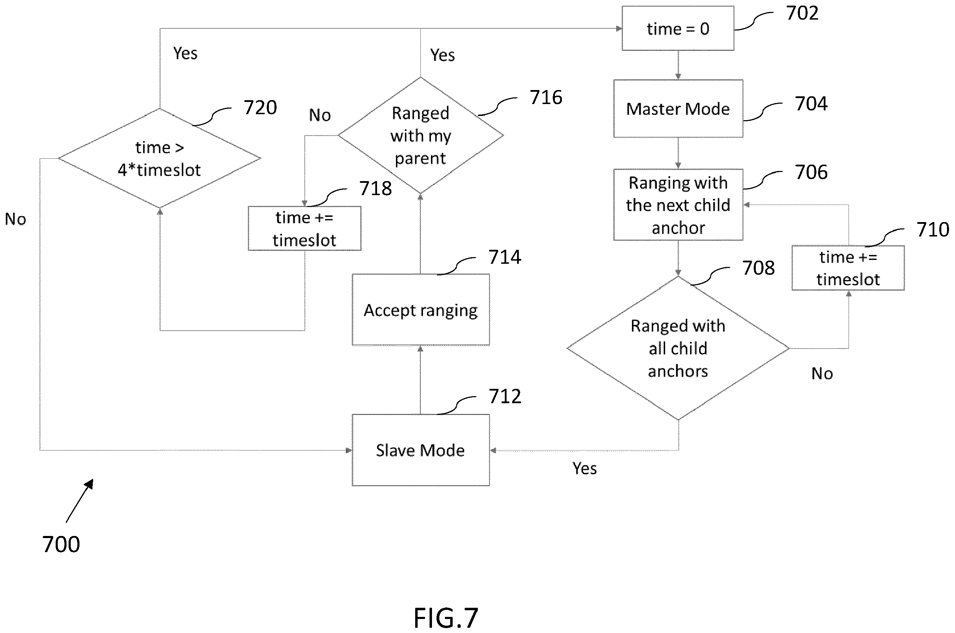

FIG.7 is a flowchart 700 that illustrate operational functionality of a primary anchor, in accordance with an embodiment of the present invention. The flowchart 700 has been explain with reference to FIGs. 5 and 6. Herein, the anchor A is set to be the primary anchor as it holds the time synchronization functionalities to start the first TWR session.

At step 702, time t is set to be 0. At step 704, the primary anchor is set to be in the master mode. At step 706, the primary anchor ranges with a next child anchor. In this case, the primary anchor A may range with its child anchor B. Then at step 708, it is checked if the primary anchor has ranged with all its child anchors. If the primary anchor has not ranged with all corresponding child anchors, then at step 710, time t is increased by a predefined timeslot. Thus, the time t is increased by the number of time slots equivalent to the number of child anchors.

When the primary anchor has ranged with all the child anchors, then at step 712, the primary anchor switches to the slave mode and accepts ranging at step 714. It is checked at step 716, if the primary anchor has ranged with corresponding parent anchor. In an example, the primary anchor A has a parent anchor D. When the primary anchor A has ranged with their parent anchor D, then time t is again set to zero, which means one sequence/round of ranging sessions is completed. If the primary anchor A has not ranged with their parent anchor, then at step 718, the time t is increased by the pre-defined timeslot. When the current time t is greater than 4*timeslot at step 720, then time t is set to be 0, else, the primary anchor remains in the slave mode.

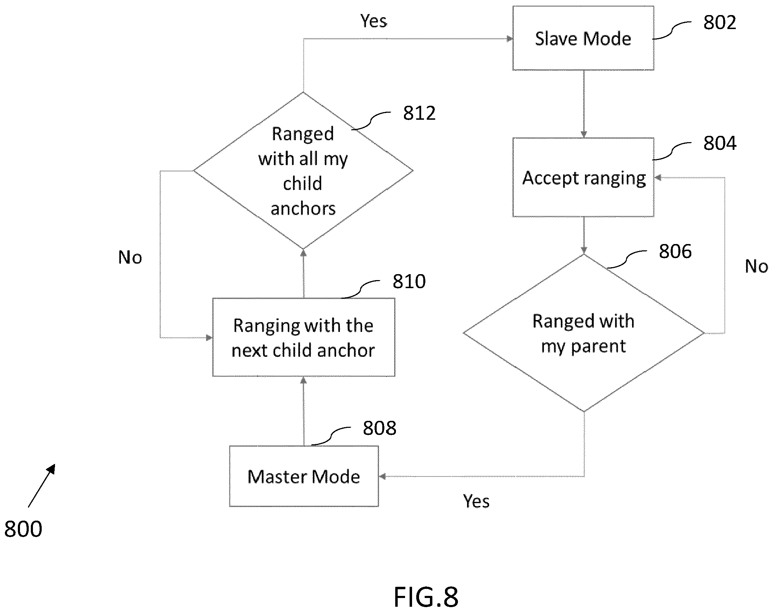

FIG.8 is a flowchart 800 that illustrates operational functionality of all anchors other than the primary anchor, in accordance with an embodiment of the present invention. The flowchart 800 has been explained with reference to FIGs. 5 and 6 for the anchor B.

At step 802, the anchor B is set to be in slave mode, and starts accepting ranging request at step 804. Herein, the anchor B has the parent anchor A. At step 806, it is checked if the anchor has ranged with their parent. The anchor continues accept ranging request till it ranges with its parent anchor. When the anchor ranges with its parent anchor, it switches to the master mode at step 808. At step 810, the anchor range with a corresponding next child anchor. In an example, the anchor B may range with a child anchor C. When the anchor ranges with all the child anchors at step 812, then it switches to the slave mode. Thus, each anchor keeps on alternating between master and slave modes.

Referring to FIGs. 5-8, in order to establish a ranging session between two anchors, the primary anchor (in this case, primary anchor is anchor A) sends a ranging request, containing the ranging recipe and the identification of slave anchor (in this case, slave anchor is anchor B), which is provided to the master anchor in child anchors array 600. Consequently, the intended slave anchor authorizes this request and responds to the master anchor with a ranging acceptance, containing the agreed recipe and the ranging session address. The ranging session address is a new identification formed at the slave anchor from the master and the slave addresses. One way to do that is simply by concatenating the master address with the slave address or concatenate only part of the two addresses (i.e., most significant part). For example, the ranging session address, between anchors A (Master) and B (Slave), would be AB. AB has to be a unique address in the topology that only identifies the session between anchor A (Master) and anchor B (Slave). Once the ranging Ack arrives at the master anchor, the master anchor uses the same technique to form a ranging session address and checks it against the ranging session address in the received ranging Ack. Next, the master anchor executes the ranging recipe.

When an independent observer 502 wants to estimate their position, it may first wake up to listen to ranging requests and/or ranging accept messages. Once one is received, the observer 504 may understand a ranging recipe to be executed and may synchronize themselves to it. Once one ranging session is finished, the observer 502 may calculate the corresponding TDoA. Typically, the observer 502 may try to discover the sessions with low SF first as they are more power-efficient than the high SF sessions (i.e., low SF means faster airtime). When the observer 502 cannot discover the low SF sessions, it may switch to a higher SF, which means larger spatial reach but longer airtime (i.e., higher power consumption). Since, the ranging sessions are organized sequentially in time, the observer 502 may keep listening to the following ranging request and/or ranging accept to observe the next ranging session without losing time and energy in listening. The observer 502 may require a minimum of two different measurements for estimating their two-dimensional position. However, typically the observer 502 may obtain more TDoA measurements to increase the confidence in the position estimation. Once the observer 502 obtains enough TDoA measurements, it may apply any multilateration technique to estimate its position locally or send the gathered information to a cloud server for position estimation through an uplink mechanism.

In an embodiment of the present invention, there is further provided a mechanism to identify sessions in the same box, when multiple boxes exist. An observer 502 may filter sessions based on their addresses, as the next session address must have part of the address of the previous session address. A tag would get the Received Signal Strength Indicator (RSSI) of a master anchor each time. If it follows it around, it would get the RSSI of the master and slave in subsequent sessions. For instance, if it gets RSSI of the master anchor in current session, in the next session, it would get the RSSI of the next master which was the slave, etc.

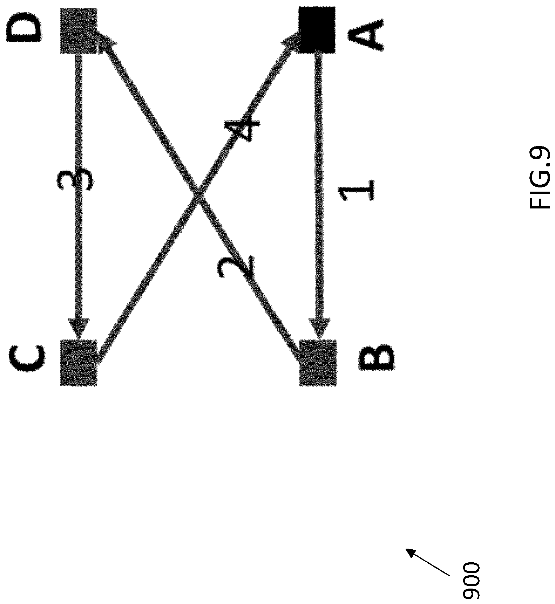

FIG.9 illustrates another topology 900 of the basic network unit 200 of FIG.2, in which the anchors engaged in diagonal ranging sessions, in accordance with an embodiment of the present invention. In said topology 900, each anchor ranges with another anchor placed at a diagonally opposite corner, to maximise the line-of-sight.

Referring to FIGs. 2-9, there is further provided a failure mechanism, in which when one session fails, the anchor may attempt a session with the next anchor in the chain. When an anchor tries to initiate a session with the failed anchor, it may get no response. After a number of retires or a wait period, the anchor may try to start a session with the next anchor in the chain, hence keeping the sessions going about the topology and bypassing the failed anchor. In addition, a mechanism may be used where an anchor has a time out, and if that timeout occurs without any session being requested, the child anchors may start the session. In this way, even if the primary anchor fails, the other anchors may kick off the process and generate sessions so the tags can gather the information needed to determine their position.

In a further embodiment of the present invention, there is provided a way to organise a TWR session, which has a benefit in system calibration, is interleaving. Using interleaving, instead of executing all ranging pings from one anchor, e.g., ranging master (anchor A), to another anchor, e.g., ranging slave (anchor B), the roles of master and slave may keep on rotating. One example of interleaving is when all even ranging ping numbers are initiated by anchor A towards anchor B and all odd ranging ping numbers are initiated by anchor B towards anchor A. The information that describes the interleaving used are included in the ranging request and ranging accept for the two anchors to know when to be master or slave of each ranging ping and for the observers to process the data in the right way. By using the interleaving, the observers average the two TDoA measurements (i.e., from anchor A to B and from anchor B to A), which can reduce the biased error by 50%. In an example, t1 is the time converted to distance for the tag to receive the first ping when 1 is master, t2 is the time converted to distance for the tag to receive the second signal when 1 is master, and t3 is the distance between the two anchors, then e is the common mode error.

$$deltaT_{1-2} = \frac{(t_1 - t_2 + e)}{2}$$

$$deltaT_{2-1} = \frac{((t_2 - t_3) - (t_1 + t_3) + e)}{2}$$

$$t_3 - deltaT_{2-1} = deltaT_{1-2}$$

Averaging both values gives

$$deltaT_{1-2} = \frac{((t_1 - t_2 + e) + 2(t_3) - ((t_2 - t_3) - (t_1 + t_3) + e))}{4}$$

$$deltaT_{1-2} = \frac{(2(t_1) - 2(t_2) + e - e)}{4}$$

Hence the averaging out leads to removal of common mode error as the e's cancel out.

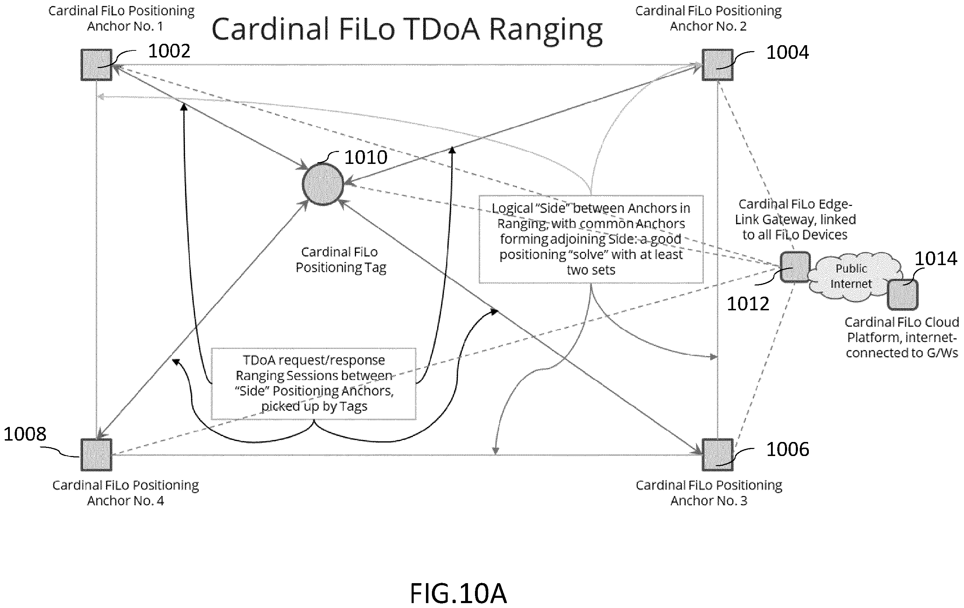

FIG.10A illustrates the IoT implementation of the basic network unit 200, in accordance with an embodiment of the present invention.

As illustrated, four anchors 1002, 1004, 1006 and 1008 are positioned at four corners of a box, in which each anchor is a radio-capable IoT device with the Two-Way Ranging capability, fixed in a known location. Each anchor is also known as the "Cardinal FiLo Positioning Anchor No. N", that performs successive Two-Way Ranging with adjacent anchor devices. Also, provided is the tag 1010 that is a radio-capable IoT end device with the Advanced Ranging capability, and attached to the asset or person whose positioning is to be tracked. The tag 1010 is hereinafter also referred to as the "Cardinal FiLo Positioning Tag".

The anchors 1002, 1004, 1006 and 1008 and the tag 1010 are capable of forwarding packets of IoT ranging data to network-connected elements of the service, through an appropriate radio Edge-Link Gateway 1012. Further, a network-connected IoT Cloud platform 1014 may receive data indicating the geolocation of the FiLo devices and may present abstraction of the FiLo device characteristics, including their positions.

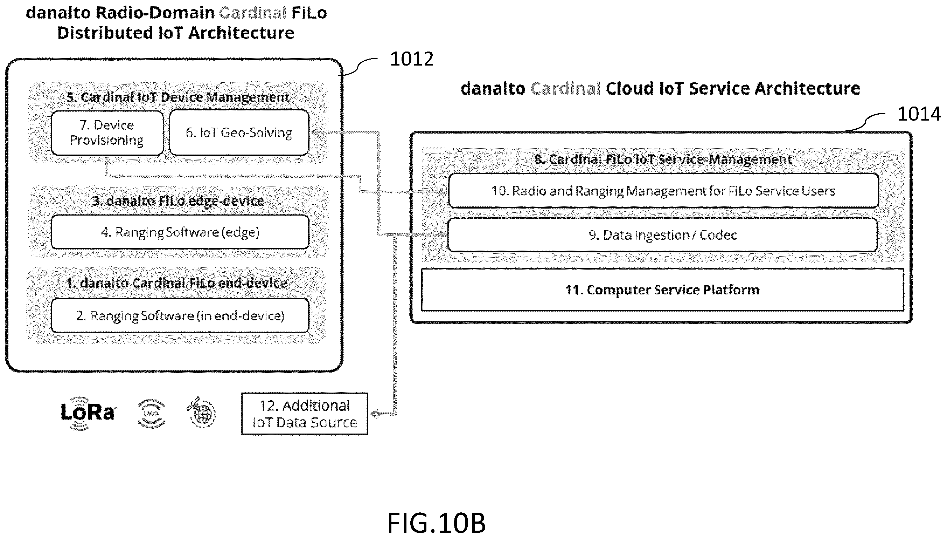

FIG.10B illustrates in brief a radio-domain cardinal distributed IoT architecture 1102, and a cardinal cloud IoT service architecture 1104, in accordance with an embodiment of the present invention.

The radio-domain cardinal distributed IoT architecture 1102 is formed of Cardinal end device including a ranging software, an edge-device including a ranging software, and an IoT device management system that performs IoT geo-solving and device positioning. The IoT device-management system may receive forwarded packets of IoT ranging data from network connected devices, and may send IoT device control message packets towards such devices. The cardinal cloud IoT service architecture 1104 includes an IoT service-management system that performs radio and ranging management for users, data ingestion, and a computer service platform.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g., a memory stick or hard disk. The carrier may be an electrical or optical signal which may be transmitted via an electrical or an optical cable or by radio or other means.

In the specification, the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

**Claims**

1. A two-way ranging (TWR) system, comprising:

   a plurality of anchors enclosing a geographical region, each anchor configured to run a two-way ranging (TWR) session with another anchor, wherein a set of TWR sessions among the plurality of anchors are sequential and synchronised with respect to each other, to minimize discovery time of a mobile observer roaming within the geographical region, for gathering ranging information.

2. The system as claimed in claim 1, wherein the plurality of anchors includes four anchors positioned at four corners of the geographical region to form a box, wherein the four anchors range with each other based on predefined parent and child relationships among the four anchors, and wherein a parent anchor operates in master mode to initiate a TWR ranging session with corresponding child anchor that operates in slave mode, and wherein an anchor becomes a parent to corresponding child anchor in a current TWR session, when the anchor has ranged with corresponding parent anchor in a previous TWR session.

3. The system as claimed in claim 2, wherein an anchor ranges with an adjacent anchor in the box or .
   a diagonally opposite anchor in the box.

4. The system as claimed in any preceding claim, wherein an anchor of the four anchors is set to be a primary anchor for ranging with corresponding child anchor in a first time slot of a sequence of predefined number of time slots, and for ranging with corresponding parent anchor in a last time slot of the sequence of predefined number of time slots, and wherein upon completion of the predefined number time slots of a current sequence, the primary anchor ranges with corresponding child anchor in a first time slot of corresponding next sequence.

5. The system as claimed in any preceding claim, wherein a plurality of boxes is combined to form an extended network based on a set of predefined rules, the set of predefined rules including having one active TWR session per box, every two adjacent boxes sharing a side, and time slots for conducting TWR sessions being allocated to respective anchors in clockwise direction of respective box.

6. The system as claimed in claim 5, wherein when an anchor has a plurality of child anchors in the extended network, a time offset integer is assigned to each child anchor, to introduce time delay among TWR sessions between the anchor and each child anchor.

7. The system as claimed in claim 6, wherein in the extended network, the primary anchor sets current time t=0, and initiates ranging with a corresponding child anchor, and increases current time by a predefined time slot every time upon ranging with each child anchor, and wherein the primary anchor switches to slave mode upon ranging with each of corresponding child anchors, and sets current time t=0, after ranging with corresponding parent anchor, or when the current time exceeds a threshold time duration.

8. The system as claimed in claim 7, wherein in the extended network, an anchor other than the primary anchor accepts ranging request from corresponding other anchors till the anchor ranges with corresponding parent anchor, and upon ranging with corresponding parent anchor, the anchor switches to master mode to range with corresponding child anchors, and upon ranging with each child anchor, the anchor switches to slave mode.

9. The system as claimed in any preceding claim, wherein a master anchor sends a ranging request, containing a ranging recipe and an identification of corresponding slave anchor to initiate a TWR session, and said slave anchor responds to the master anchor with a ranging acceptance, containing agreed recipe and a ranging session address, wherein the ranging session address is a unique identification formed at the slave anchor based on the master and the slave addresses, and wherein the master anchor forms a ranging session address upon receiving a ranging acknowledgement from corresponding child anchor, and checks against the ranging session address received in the ranging acknowledgement.

10. The system as claimed in any claim 9, wherein the mobile observer wakes up to listen to one or more ranging requests and ranging accept messages and calculate corresponding time difference of arrival (TDoA) by executing corresponding ranging recipes, and wherein a position of the mobile observer is estimated based on a plurality of calculated TDoAs.

**11.** The system as claimed in any preceding claim, wherein a TWR session between master and slave anchors is executed using one or more Spreading factors (SFs) in same time domain.

**12.** The system as claimed in claim 11, wherein the mobile observer is configured to listen to ranging information corresponding to a low spreading factor when the mobile observer is within a predetermined distance from corresponding master and slave anchors, and is configured to listen to ranging information corresponding to a high spreading factor, when the mobile observer is outside of the predetermined distance from corresponding master and slave anchors or when the mobile observer does not discover the ranging information corresponding to the low spreading factor.

**13.** The system as claimed in any preceding claim, wherein the master and slave alternate roles in single session to provide interleaving session requests and session request acknowledgements , to cancel common mode error in calculation of TDoA based on the ranging information of the master and slave anchors.

**14.** The system as claimed in any preceding claim, wherein each anchor is a radio-capable Internet of things (IoT) fixed device with two-way ranging capability, and the mobile observer is a radio-capable IoT device with advanced ranging capability.

**15.** A two-way ranging (TWR) method, comprising:

providing a plurality of anchors to enclose a geographical region, each anchor configured to run a two-way ranging (TWR) session with another anchor; and
enabling a set of sequential and synchronized TWR sessions among the plurality of anchors with respect to each other, to minimize discovery time of a mobile observer roaming within the geographical region, for gathering ranging information.

FIG.1

------ PRIOR ART ------

FIG.2

| Anchor Names | Parent Anchor | Child Anchors |
| --- | --- | --- |
| Anchor A | D | < B, - , - , - > |
| Anchor B | A | < C, - , - , - > |
| Anchor C | B | < D, - , - , - > |
| Anchor D | C | < A, - , - , - > |

FIG.3

EP 4 185 026 A1

FIG.4

EP 4 185 026 A1

FIG.5

| Names | Parent Anchor | Child Anchors | Time Offset |
|---|---|---|---|
| Anchor A | D | < B, - , - , - > | < 0, - , - , - > |
| Anchor B | A | < C, - , - , - > | < 0, - , - , - > |
| Anchor C | B | < D, - , - , - > | < 0, - , - , - > |
| Anchor D | C | < A, E , - , - > | < 0, 1 , - , - > |
| Anchor E | D | < F, - , - , - > | < 0, - , - , - > |
| Anchor F | E | < A, G , - , - > | < 0, 1 , - , - > |
| Anchor G | F | < H, - , - , - > | < 0, - , - , - > |
| Anchor H | G | < A, I , - , - > | < 0, 1 , - , - > |
| Anchor I | H | < B, - , - , - > | < 0, - , - , - > |

600

FIG.6

EP 4 185 026 A1

FIG.7

FIG.8

FIG.9

Cardinal FiLo Positioning Anchor No. 1  1002

Cardinal FiLo Positioning Anchor No. 2  1004

Cardinal FiLo TDoA Ranging

1010

Cardinal FiLo Positioning Tag

Logical "Side" between Anchors in Ranging, with common Anchors forming adjoining Side: a good positioning "solve" with at least two sets

Cardinal FiLo Edge-Link Gateway, linked to all FiLo Devices

Public Internet

1012

1014

Cardinal FiLo Cloud Platform, internet-connected to G/Ws

TDoA request/response Ranging Sessions between "Side" Positioning Anchors, picked up by Tags

1008

Cardinal FiLo Positioning Anchor No. 4

1006

Cardinal FiLo Positioning Anchor No. 3

FIG.10A

EP 4 185 026 A1

**danalto Radio-Domain** Cardinal **FiLo Distributed IoT Architecture**

1012

**danalto** Cardinal **Cloud IoT Service Architecture**

1014

**5. Cardinal IoT Device Management**

7. Device Provisioning

6. IoT Geo-Solving

**3. danalto FiLo edge-device**

4. Ranging Software (edge)

**1. danalto Cardinal FiLo end-device**

2. Ranging Software (in end-device)

**8. Cardinal FiLo IoT Service-Management**

10. Radio and Ranging Management for FiLo Service Users

9. Data Ingestion / Codec

**11. Computer Service Platform**

LoRa  UWB

12. Additional IoT Data Source

FIG.10B

Europäisches
Patentamt

European
Patent Office

Office européen
des brevets

# EUROPEAN SEARCH REPORT

Application Number

EP 21 20 9397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PABLO CORBALÃ N ET AL: "Chorus", INFORMATION PROCESSING IN SENSOR NETWORKS, ACM, 2 PENN PLAZA, SUITE 701NEW YORKNY10121-0701USA, 16 April 2019 (2019-04-16), pages 133-144, XP058433755, DOI: 10.1145/3302506.3310395 ISBN: 978-1-4503-6284-9 | 1,9,10, 14,15 | INV. H04W56/00 |
| Y | * paragraph [0003] * | 2-8, 11-13 | |
| | ----- | | |
| Y | FERNANDES CARVALHO D ET AL: "Hybrid indoor and outdoor localization for elderly care applications with LoRaWAN", 2020 IEEE INTERNATIONAL SYMPOSIUM ON MEDICAL MEASUREMENTS AND APPLICATIONS (MEMEA), IEEE, 1 June 2020 (2020-06-01), pages 1-6, XP033790455, DOI: 10.1109/MEMEA49120.2020.9137286 [retrieved on 2020-07-08] * paragraph [0III] * | 11,12 | TECHNICAL FIELDS SEARCHED (IPC) H04W |
| | ----- | | |
| Y | US 2021/159938 A1 (SUBRAVETI DIWAKAR [IN] ET AL) 27 May 2021 (2021-05-27) * paragraph [0042] - paragraph [0044]; figure 6 * | 2-8,13 | |
| | ----- | | |

The present search report has been drawn up for all claims

| Place of search | Date of completion of the search | Examiner |
|---|---|---|
| Munich | 26 April 2022 | Padilla Serrano, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 9397

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2022

| Patent document cited in search report | | Publication date | Patent family member(s) | | Publication date |
|---|---|---|---|---|---|
| US 2021159938 | A1 | 27-05-2021 | CN | 112825590 A | 21-05-2021 |
| | | | EP | 3826381 A1 | 26-05-2021 |
| | | | US | 2021159938 A1 | 27-05-2021 |

EPO FORM P0459

For more details about this annex : see Official Journal of the European Patent Office, No. 12/82